# EUROPEAN PATENT APPLICATION

(11) **EP 1 806 802 A2**
(43) Date of publication of application: **11.07.2007**
(21) Application number: 07100071.5
(22) Date of filing: 03.01.2007
(51) Int. Cl.: H01M 8/02, H01M 8/00

(54) **Fuel cell assembly**

(30) Priority: 04.01.2006 KR 20060001118
(71) Applicant: Samsung SDI Co., Ltd., Suwon-si, Gyeonggi-do (KR)
(72) Inventor: Eun, Yeong Chan c/o Legal & IP Team, Kiheung-eup, Yongin-si Gyeonggi-do (KR); An, Seong Jin c/o Legal & IP Team, Kiheung-eup Gyeonggi-do (KR)
(74) Representative: Walaski, Jan Filip

(57) **Abstract**

A flat type fuel cell assembly having a connector. The flat type fuel cell assembly further includes: a fuel cell main body having membrane-electrode assemblies, each membrane-electrode assembly including an electrolyte membrane, and anode and cathode electrodes being placed at opposite sides of the electrolyte membrane; anode collectors corresponding to and being in contact with the anode electrodes of the fuel cell main body, each anode collector having a terminal protruded outwardly from the fuel cell main body; cathode collectors corresponding to and being in contact with the cathode electrodes of the fuel cell main body, each cathode collector having a terminal protruded outwardly from the fuel cell main body. Here, the connector has a wiring line to electrically connect the plurality of terminals of the anode and cathode collectors in series. With this configuration, a separate wiring process can be omitted and a manufacturing process can be simplified.

## Description

The present invention relates to a fuel cell assembly, and more particularly, to a flat type fuel cell assembly having a sandwich structure, in which a connector is provided for facilitating electrical connection between cells and for securing air permeability.

A fuel cell is a power generation system that directly transforms chemical reaction energy into electric energy through an electrochemical reaction between hydrogen (or fuel) and oxygen (or oxidizing agent or oxidant). Fuel cells can be categorized into phosphate fuel cells, molten carbonate fuel cells, solid oxide fuel cells, polymer electrolyte membrane fuel cells, and alkaline fuel cells, according to the kind of electrolyte used. Each fuel cell operates on basically the same principle, but they are different in the kind of fuel, operation temperature, catalyst, and electrolyte used. As compared with other fuel cells, a polymer electrolyte membrane fuel cell (PEMFC) has a high output performance, a low operation temperature, and a quick start and response time. As such, the PEMFC is widely used as a transportable power source for a portable electronic apparatus or a vehicle, as well as a distributed power source, such as a stationary power plant, for a house or a public structure. Further, a direct methanol fuel cell (DMFC) is similar to the PEMFC, but the DMFC can directly use liquid fuel (e.g., methanol), instead of reforming gas as a reaction gas. As such, the DMFC does not need a device for reforming hydrogen containing fuel such as hydrocarbonaceous fuel. Since the DMFC does not need to use a reformer, it can be small in size as compared with the PEMFC.

Generally, the DMFC is manufactured to have a stack (or a stack structure). Here, the stack includes a membrane electrode assembly (MEA) that has an electrolyte membrane to selectively exchange a hydrogen ion and anode and cathode electrodes attached to opposite sides of the electrolyte membrane. In addition, the stack includes a separator connected to the anode and cathode electrodes of the membrane electrode assembly and employed for transferring electrons between the electrodes, for supplying the fuel and an oxidant, for discharging byproducts, and for serving as collectors for the respective electrodes, wherein the MEA and the separator are stacked alternately adjacent to each other. The foregoing DMFC directly uses the liquid fuel, such as methanol or the like, so that its energy density per volume, storability, and portability are relatively high. Thus, the DMFC is suitable for a power generation system that requires a relatively low power output and a relatively long driving time.

Recently, a DMFC has been researched and developed for use as a power source for various electronic appliances. Particularly, in the case of a small electronic appliance, such as a mobile phone, a personal digital assistant (PDA), or the like, a passive type fuel cell system or a semi-passive type fuel cell system has been researched and developed to exclude an air pump or a fuel pump in order to reduce the volume and the noise of the power generation system using the fuel cell. Here, the passive type fuel cell system is referred to as a fuel cell system that supplies fuel and an oxidant to a fuel cell without using a pump or a blower. Further, the semi-passive type fuel cell system is referred to as a fuel cell system that either employs the pump or the blower in supplying an anode or a cathode with the fuel or the oxidant.

However, in the passive or semi-passive type fuel cell system as described above, a plurality of cells are not stacked adjacent to one another, but are instead substantially disposed on a plane, so that it is difficult to connect the plurality of cells in series.

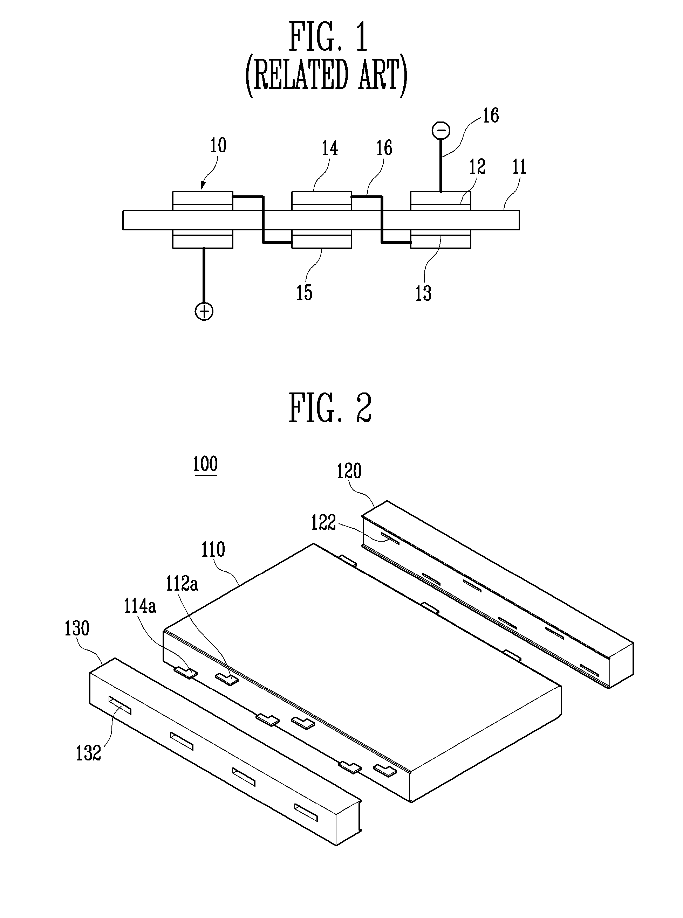

For example, the passive or semi-passive type fuel cell system may have a structure as shown in FIG.1. Here, the fuel cell system includes an electrolyte membrane 11, an anode electrode 12, a cathode electrode 13, an anode collector 14, a cathode collector 15, and a conductive wiring line 16. Here, the wiring line 16 needs to penetrate or externally bypass the electrolyte membrane 11 in order to connect the anode electrode 12 of a first (left) cell 10 with the cathode electrode 13 of a second (middle) cell and to connect the anode electrode 12 of the second cell with the cathode electrode 13 of a third (right) cell. In the case where the wiring line 16 penetrates the electrolyte membrane 11, solidity (or impermeability) between the anode and cathode electrodes 12 and 13 is lost due to a hole formed in the electrolyte membrane 11, and thus the fuel supplied to the anode electrode 12 may leak to the cathode electrode 13. Further, in the case where the wiring line 16 bypasses outside the fuel cell, the wiring line 16 is long and complicated to form.

Accordingly, it is an aspect of the present invention to provide a flat type fuel cell system of a semi-passive type directly using air as an oxidant and having a sandwiched structure, in which a wiring line provided in a connector and a plurality of terminals coupled to cells are used instead of a wiring line penetrating an electrolyte membrane, thereby obtaining various output voltages, securing air permeability when it is mounted, and preventing an external shock.

An embodiment of the present invention provides a flat type fuel cell assembly including: a fuel cell main body having a plurality of membrane-electrode assemblies, each of the membrane-electrode assemblies including an electrolyte membrane, an anode electrode, and a cathode electrode, the anode and cathode electrodes being placed at opposite sides of the electrolyte membrane; a plurality of anode collectors corresponding to and being in contact with the anode electrodes of the plurality of membrane-electrode assemblies of the fuel cell main body, each of the anode collectors having a terminal protruded outwardly from the fuel cell main body; a plurality of cathode collectors corresponding to and being in contact with the cathode electrodes of the plurality of membrane-electrode assemblies of the fuel cell main body, each of the cathode collectors having a terminal protruded outwardly from the fuel cell main body; and a connector having a wiring line to electrically connect the plurality of terminals of the anode and cathode collectors in series.

According to one embodiment of the invention, the connector is sliding-coupled to at least one surface of the fuel cell main body.

According to one embodiment of the invention, the connector is coupled to each of the membrane-electrode assemblies and has a plurality of terminal coupling parts to extract various voltages from the fuel cell main body.

According to one embodiment of the invention, the connector includes a plurality of lead terminals having a leg shape and coupled to the terminal coupling parts. According to one embodiment of the invention, the fuel cell main body includes: a middle plate having an inlet and an outlet adapted to introduce and discharge fuel, respectively, a manifold adapted to flow the fuel therethrough, and a plurality of holes adapted to distribute and supply the fuel; the plurality of membrane-electrode assemblies placed on opposite sides of the middle plate; the plurality of anode collectors placed between the middle plate and one surface of at least one of the membrane-electrode assemblies, each of the anode collectors having a channel to guide the flow of the fuel supplied through at least one of the holes; the plurality of cathode collectors being placed on the other surface of the at least one of the membrane-electrode assemblies, each of the cathode collectors having an opening to expose the cathode electrode of the at least one of the membrane-electrode assemblies; an end plate placed on the plurality of cathode collectors, the middle plate being between the end plate and another end plate; and a fastening part adapted to assemble the end plate with the another end plate with a predetermined pressure.

According to one embodiment of the invention, the fastening part includes a screw combining part (e.g., a bolt) for penetrating the end plate, the middle plate, and the another end plate.

Another embodiment of the present invention provides a flat type fuel cell assembly including: a middle plate provided with a flow channel through which fuel is supplied; a plurality of membrane-electrode assemblies placed at opposite sides of the middle plate, and comprising an electrolyte membrane, an anode electrode, and a cathode electrode, the anode and cathode electrodes attached to opposite sides of the electrolyte membrane; a plurality of anode collectors placed between one surface of at least one of the membrane-electrode assemblies and one of the opposite sides of the middle plate, each of the anode collectors having a channel connected to the flow channel to guide the flow of the fuel; a plurality of cathode collectors placed on the other surface of the at least one of the membrane-electrode assemblies; and at least one first lead terminal and at least one second lead terminal protruded and extended from the anode collector and the cathode collector in opposite lateral sides of the middle plate, respectively, the at least one first lead terminal and the at least one second lead terminal having a bending leg shape.

According to one embodiment of the invention, the flat type fuel cell assembly further includes a connector for supporting the at least one first lead terminal and the at least one second lead terminal and coupled to the flat type fuel cell assembly.

The accompanying drawings, together with the specification, illustrate exemplary embodiments of the present invention, and, together with the description, serve to explain the principles of the present invention.
FIG. 1 is a schematic view of a conventional passive type fuel cell system;
FIG. 2 is a schematic exploded perspective view of a flat type fuel cell assembly according to a first embodiment of the present invention;
FIGs. 3A and 3B illustrate an assembled structure of the flat type fuel cell assembly of FIG. 2;
FIG. 4 is a schematic view illustrating an electric circuit structure of the flat type fuel cell assembly according to the first embodiment of the present invention;
FIG. 5 is a perspective view of a flat type fuel cell assembly according to a second embodiment of the present invention;
FIG. 6 is a partial perspective view illustrating another mounting structure of the flat type fuel cell assembly according to an embodiment of the present invention;
FIG. 7 is a perspective view of a fuel cell main body employable in the flat type fuel cell assembly according to an embodiment of the present invention and a connector corresponding thereto;
FIG. 8 is an exploded perspective view of the fuel cell main body of FIG. 7; and
FIG. 9 illustrates an operation of a fuel cell main body according to an embodiment of the present invention.

Hereinafter, exemplary embodiments according to the present invention will be described with reference to the accompanying drawings.

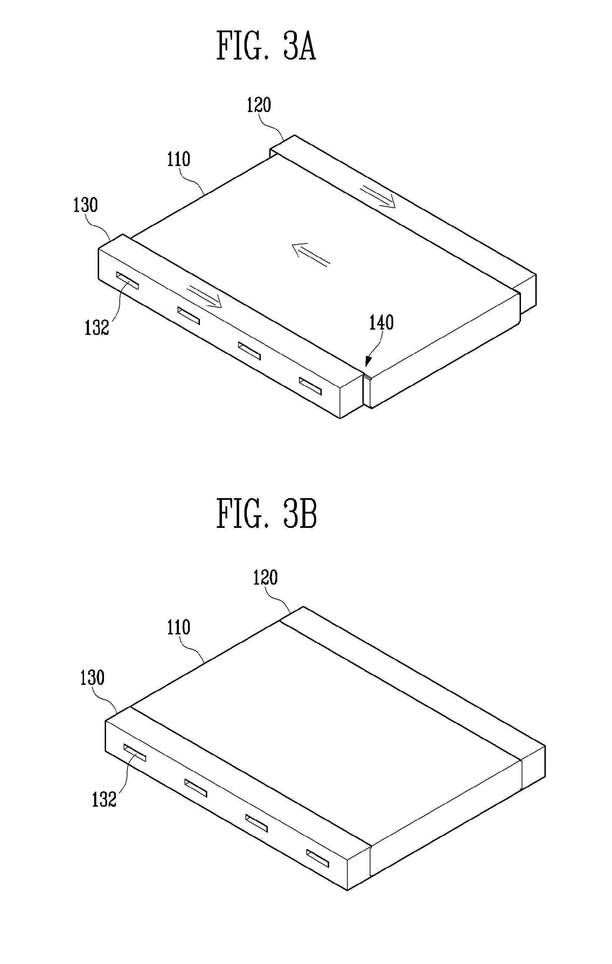

FIG. 2 is a schematic exploded perspective view of a flat type fuel cell assembly according to a first embodiment of the present invention. FIGs. 3A and 3B illustrate an assembled structure of the flat type fuel cell assembly of FIG. 2. Referring to FIG. 2, a fuel cell assembly 100 includes a fuel cell main body 110, a first connector 120, a second connector 130, and one or more terminal coupling parts 132.

The fuel cell main body 110 generates electricity and heat by electrochemically reacting fuel and an oxidant. The fuel cell main body 110 is provided with a membrane-electrode assembly (MEA) as an element of a fuel cell. The MEA includes an electrolyte membrane, and anode and cathode electrodes placed at (or in) opposite sides of the electrolyte membrane.

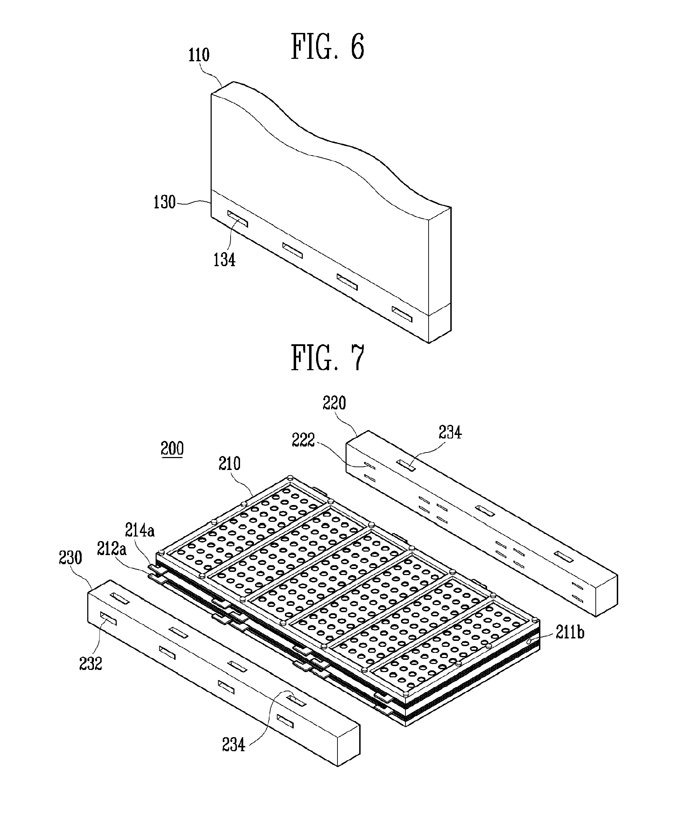

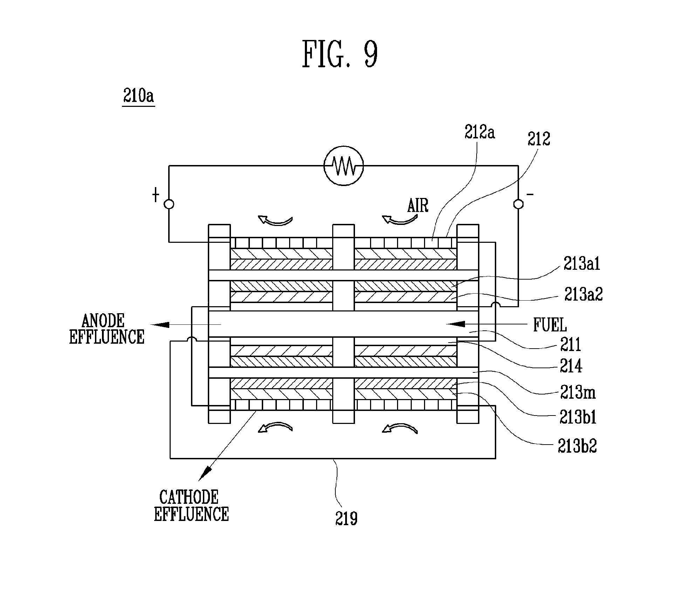

The fuel cell main body 110 receives the fuel by a compressing unit such as a pump or the like, and uses air as the oxidant. An example of this structure will be described in more detail below with reference to FIGs. 7 and 9.

Further, the fuel cell main body 110 includes first terminals 112a and second terminals 114a, which protrude from opposite lateral sides thereof (shown in FIG. 2). The first terminals 112a are extended from a cathode collector, and the second terminals 114a are extended from an anode collector.

The first connector 120 includes coupling grooves 122 in which the first and second terminals 112a and 114a protruding and extended from the first lateral side of the fuel cell main body 110 are inserted. Further, the first connector 120 includes the one or more terminal coupling parts 132 to be electrically connected with one or more external parts. Likewise, the second connector 130 includes coupling grooves 122 in which the first and second terminals 112a and 114a protruding and extended from the second lateral side opposite to the first lateral side of the fuel cell main body 110 are inserted. Also, the second connector 130 includes one or more terminal coupling parts 132 to be electrically connected with one or more external parts.

As shown in FIGs. 3A and 3B, the first and second connectors 120 and 130 can have a slide-coupling structure 140 to stably and firmly couple themselves with the fuel cell main body 110. Thus, the first and second connectors 120 and 130 are slidably engaged (or sliding-coupled) with the lateral sides of the fuel cell main body 110. Using the slide-coupling structure 140, the fuel cell main body 110 is relatively more stably and firmly connected with the first and second connectors 120 and 130.

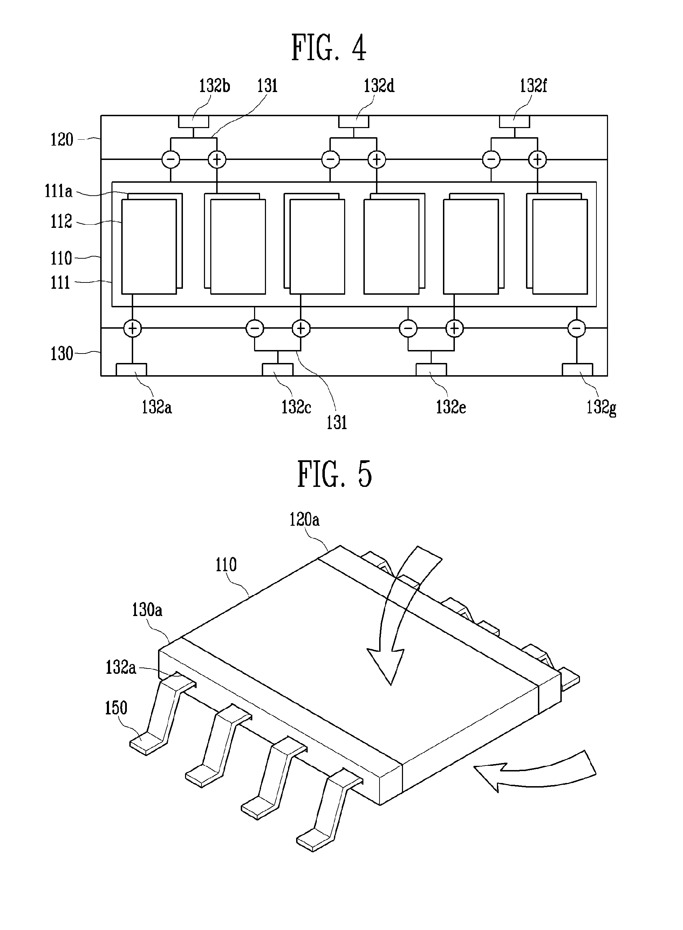

FIG. 4 is a schematic view illustrating an electric circuit structure of the flat type fuel cell assembly according to the first embodiment of the present invention.

Referring to FIG. 4, the flat type fuel cell assembly includes the fuel cell main body 110, and the connectors 120 and 130 having wiring lines to be electrically connected to terminals protruding and extended from the opposite lateral sides of the fuel cell main body 110.

The fuel cell main body 110 includes a cathode electrode 111a placed on a first side of an electrolyte membrane 111; an anode electrode (not shown) placed on a second side of the electrolyte membrane 111 and opposite to the cathode electrode 111a across the electrolyte membrane 111; and a cathode collector 112 and an anode collector to collect an electromotive force from the cathode electrode 111a and the anode electrode, respectively (or to collect a difference in electric potential between the cathode electrode 111a and the anode electrode). As described above, the cathode collector 112 and the anode collector are formed with the terminals (e.g., 112a, 114a) protruding and extended outwardly from the fuel cell main body 110. The first and second connectors 120 and 130 include the wiring lines 131 to be electrically connected to the terminals. The wiring lines 131 electrically connect the anode collector contacting the anode electrode of one MEA with the cathode collector contacting the cathode electrode of another MEA.

Further, the first and second connectors 120 and 130 include the terminal coupling parts 132a, 132b, 132c, 132d, 132e, 132f and 132g, which are electrically connected to the wiring line 131 connecting two MEAs in series and are used for electric contact with an external electric wire or an external lead terminal.

With the foregoing configuration, it is possible to obtain various voltages and currents outputted from the fuel cell main body 110.

FIG. 5 is a perspective view of a flat type fuel cell assembly according to a second embodiment of the present invention.

Referring to FIG. 5, a flat type fuel cell assembly includes a fuel cell main body 110, a first connector 120a, a second connector 130a, and a lead terminal 150.

The flat type fuel cell assembly according to the second embodiment is substantially the same as the first embodiment described above with the exception that, in the second embodiment, a plurality of lead terminals 150 are coupled to the first and second connectors 120a and 130a, and each of the first and second connectors 120a and 130a is used for (or just for) holding and supporting the plurality of lead terminals 150.

The lead terminals 150 have a leg shape (e.g., a bent leg shape) and are fastened to the terminal coupling parts 132 (e.g., the terminal coupling part 132a) of the first and second connectors 120a and 130a. In other words, the plurality of lead terminals 150 is settled in a uniform shape by the first and second connectors 120a and 130a and electrically connected to the terminals protruding and extended from the fuel cell main body 110.

The lead terminals 150 output the voltage and the current of each fuel cell. According to the present invention, the lead terminals 150 can be connected in series, parallel or combination thereof, so that various outputs can be provided. Further, the lead terminals 150 can be mounted on a circuit board provided with a certain (or predetermined) electric circuit wiring line in an appliance using the flat type fuel cell assembly. Also, the lead terminals 150 allow the flat type fuel cell assembly to be disposed at a certain (or predetermined) height from the mounting surface, so that air is smoothly supplied to the cathode electrode exposed at the upper and lower surfaces of the flat type fuel cell assembly.

Also, a flat type fuel cell assembly of an embodiment of the present invention does not have to be mounted as shown in FIG. 2 or 5, and can instead be mounted in a standing state as shown in FIG. 6. In this case, in one embodiment, the flat type fuel cell assembly is mounted as standing in a vertical direction and allows a first surface of the connector to face the mounting surface in consideration of proper fuel supply to the fuel cell main body 110. As the flat type fuel cell assembly is mounted in a standing state along the vertical direction, the terminal coupling part 134 is provided in a second surface of the second connector 130 (e.g., perpendicular to the first surface) so that the second surface of the second connector 130 does not face toward the mounting surface. In one embodiment, the terminal coupling part 134 is provided in a surface adjacent to the surface of the second connector 130 facing the mounting surface.

FIG. 7 is a perspective view of a fuel cell main body that can be employed in a flat type fuel cell assembly according to an embodiment of the present invention, and a connector corresponding thereto.

Referring to FIG. 7, a flat type fuel cell assembly 200 has a sandwiched structure and includes a fuel cell main body 210, a first connector 220, and a second connector 230.

The fuel cell main body 210 includes a plurality of membrane-electrode assemblies, which are symmetrically placed in upper and lower surfaces leaving a middle plate therebetween (or sandwiched therebetween). Further, the fuel cell main body 210 includes an anode collector and a cathode collector, which are in contact with an anode electrode and a cathode electrode of the MEA, respectively. Also, the fuel cell main body 210 includes first and second terminals 212a and 214a protruding and extended outwardly from the anode collector and the cathode collector, respectively.

The fuel cell main body 210 includes a fuel inlet 211b placed in a first lateral side of the middle plate and coupled to a fuel feeder, and a fuel outlet placed in a second lateral side opposite to the first lateral side of the middle plate and used for discharging the fuel.

The first connector 220 includes coupling grooves 222 in which first and second terminals protruding and extended from a third lateral side of the fuel cell main body 210 are inserted. Further, the first connector 220 includes second terminal coupling parts 234 to be electrically connected with one or more external parts. Likewise, the second connector 230 includes coupling grooves in which first and second terminals 212a and 214a protruding and extending from a fourth lateral side opposite to the third lateral side of the fuel cell main body 210 are inserted. Also, the second connector 230 includes first and second terminal coupling parts 232 and 234 to be electrically connected with the outside. Here, the first and second terminal coupling parts 232 and 234 can be selectively used according to mounting structures of the flat type fuel cell assembly 200.

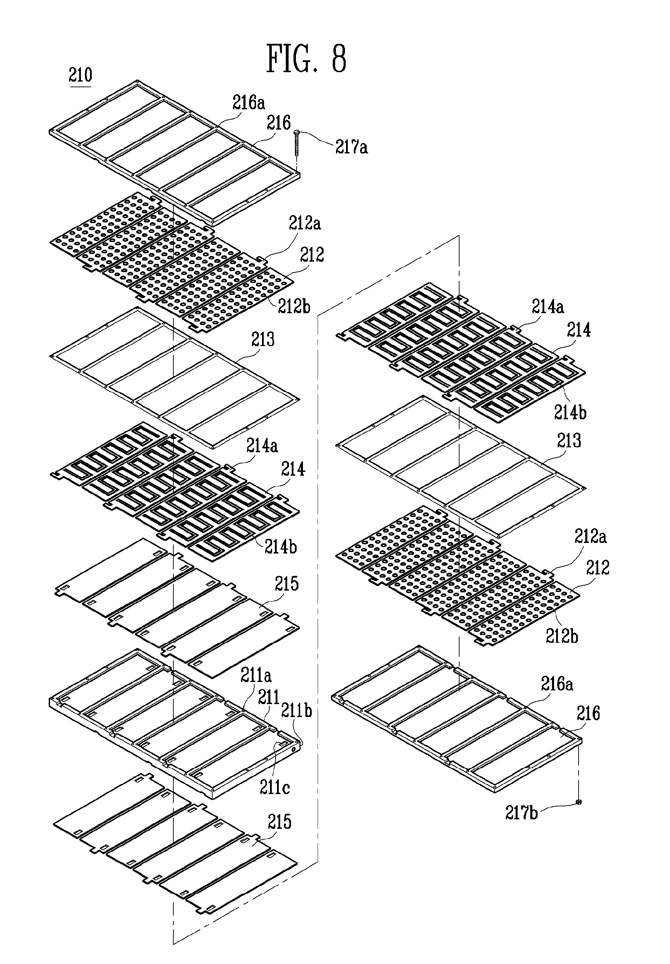

The foregoing fuel cell main body 210 will be described in more detail. FIG. 8 is an exploded perspective view of the fuel cell main body of FIG. 7.

Referring to FIG. 8, the fuel cell main body 210 includes the middle plate 211, the cathode collector 212, the MEA 213, the anode collector 214, a gasket 215, an end plate 216 and a fastening part (e.g., bolt and nut 217a and 217b). According to an embodiment of the present invention, six unit cells are disposed in parallel on the substantially same plane of the upper and lower surfaces of the middle plate 211. In more detail, the middle plate 211 includes six recessed regions on each of the upper and lower surfaces thereof to individually accommodate six unit cells, each of which includes the gasket 215, the anode collector 214, the MEA 213, and the cathode collector 212. Further, the middle plate 211 is formed with a hole 211a through which the fastening part (e.g., bolt 217a) passes in order to apply a fastening force to a pair of end plates at the outmost side of the fuel cell main body 210.

Further, the middle plate 211 includes the fuel inlet 211b and the outlet to introduce and discharge the fuel. Additionally, the middle plate 211 includes a manifold internally extended from the fuel inlet 211b and the outlet and passing the introduced fuel therethrough, and a plurality of holes 211c for distributing and supplying the fuel from the manifold.

The gasket 215 is placed between the middle plate 211 and the anode collector 214 on the upper and lower surfaces of the middle plate 211 (shown in FIG. 8), and prevents the fuel supplied to the anode electrode of the MEA 213 from leakage. Further, the gasket 215 provides elasticity against the fastening force when the fuel cell main body 210 is assembled, thereby enhancing a sealing effect of the fuel cell main body 210. Here, the gasket 215 can include silicon or other suitable materials and be implemented in the configuration of FIG. 8 or other suitable structures and shapes.

The anode collector 214 is placed between the middle plate 211 and the MEA 213 on the upper and lower surfaces of the middle plate 211. The anode collector 214 includes the second terminals 214a extended outwardly from the fuel cell main body 210. As described above, the second terminals 214a are bent to have a substantially L-shape suitable for sliding-coupling with the connector (or so that the second terminals 214a can be sliding-coupled with the connector).

Also, the anode collector 214 collects the electromotive force generated in the anode electrode. Here, the anode collector 214 is provided with a channel 214b to efficiently supply the fuel to the anode electrode of the MEA 213. The channel 214b can have various shapes, such as a zigzag shape, a straight line, etc. In one exemplary embodiment, the anode collector 214 is made of a relatively high conductive material.

The MEA 213 is placed between the anode collector 214 and the cathode collector 212 on the upper and lower surfaces of the middle plate 211. The MEA 213 includes the electrolyte membrane, and the anode and cathode electrodes placed in the opposite sides of the electrolyte membrane. Here, the electrolyte membrane, the anode electrode, and the cathode electrode can be implemented by various suitable materials and structures.

The cathode collector 212 is placed on the anode electrode of the MEA 213 in the upper and lower surfaces of the middle plate 211. The cathode collector 212 includes the first terminals 212a extended outwardly from the fuel cell main body 210. As described above, the first terminals 212a are bent to have a substantially L-shape suitable for sliding-coupling with the connector (or so that the first terminals 212a can be sliding-coupled with the connector).

Also, the cathode collector 212 collects the electromotive force generated in the cathode electrode. Here, the cathode collector 212 is formed with an opening 212b to supply air to the cathode electrode. The opening 212b has a circular shape, but is not limited thereto. Alternatively, the opening 212b may have various shapes and sizes, e.g., a rectangular shape. In one exemplary embodiment, the cathode collector 212 includes a relatively high conductive material having a hydrophobic coating layer. Here, the high conductive material includes gold, aluminum, copper, etc., or alloys containing mainly at least one of gold, aluminum, copper, etc. Alternatively, the high conductive material may be implemented by various other suitable materials as long as they are highly conductive.

The pair of end plates 216 is placed on the cathode collector 212 in the upper and lower surfaces of the middle plate 211. Each of the end plates includes a hole 216a through which a fastening part passes. In one embodiment, the fastening part includes a bolt 217a and a nut 217b, so that the end plates 216 are assembled by the fastening part. In one embodiment, the end plate 216 has a structure capable of applying the fastening force of the fastening part to the fuel cell main body 210 uniformly. Further, in one embodiment, the end plate 216 has a structure capable of exposing (or maximally exposing) the opening 212b of the cathode collector 212 so as to make air flow smoothly. The foregoing fastening part is implemented by the bolt and the nut, but is not limited thereto. Alternatively, the fastening part may be implemented by various other suitable parts such as a belt, air pressure, molding, etc.

FIG. 9 illustrates an operation of a fuel cell main body according to an embodiment of the present invention. For convenience, the fuel cell main body of FIG. 9 has a structure in which two unit cells are provided in the upper and lower surfaces of the middle plate.

Referring to FIG. 9, when the fuel is introduced into the fuel inlet of the middle plate 211 of a fuel cell main body 210a, the introduced fuel passes through the channel formed in each anode collector 214 via the hole formed in the manifold of the middle plate 211. When the fuel passing through the channel reaches a catalyst layer 213a1 through a diffusion layer 213a2 of the anode electrode contacting the anode collector 214, the fuel is oxidized by the catalyst, thereby generating hydrogen ions and electrons. Here, oxygen in the air is supplied as the oxidant to a catalyst layer 213b1 via a diffusion layer 213b2 of the cathode electrode, and oxygen is reacted with both the hydrogen ions transferred from the anode electrode to the cathode electrode via the electrolyte membrane 213m and the electrons transferred from the anode electrode to the cathode electrode via an external wiring line 219, thereby producing water and heat. Here, the movement of the electrons results in the formation of an electrical current (or electric energy).

Carbon dioxide produced by oxidation of the unreacted fuel is discharged as an anode effluence via the hole connected to another manifold of the middle plate 211 and the fuel outlet. Further, water produced in the cathode electrode is discharged as a cathode effluence via the opening 212b of the cathode collector 212. The external wiring line 219 connects (or electrically couples) the unit cells in series. Here, the electrolyte membrane 213m, the catalyst layers 213a1 and 213b1, and the diffusion layers 213a2 and 213b2 can be any suitable electrolyte membranes, catalyst layers, and diffusion layers.

According to an embodiment of the present invention, a flat type fuel cell assembly has an improved structure in which a wiring line is provided in a connector, thereby simplifying a manufacturing process. Further, the flat type fuel cell assembly is easily installed with good air permeability in an appliance, protected from an external shock, and selectively outputs various voltages.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A planar fuel cell assembly comprising:
a fuel cell main body comprising one or more membrane-electrode assemblies, each of the one or more membrane-electrode assemblies including an electrolyte membrane, an anode electrode, and a cathode electrode, the anode and cathode electrodes being arranged at opposite sides of the electrolyte membrane;
one or more anode collectors corresponding to and being in contact with the anode electrodes of the one or more membrane-electrode assemblies of the fuel cell main body, each of the one or more anode collectors having a terminal protruding outwardly from the fuel cell main body;
one or more cathode collectors corresponding to and being in contact with the cathode electrodes of the one or more membrane-electrode assemblies of the fuel cell main body, each of the cathode collectors having a terminal protruding outwardly from the fuel cell main body; and
a connector having a wiring line to electrically connect the plurality of terminals of the anode and cathode collectors in series.

2. The planar fuel cell assembly according to claim 1, wherein the connector is slide-coupled to at least one surface of the fuel cell main body.

3. The planar fuel cell assembly according to claim 1 or 2, wherein the connector is coupled to each of the one or more membrane-electrode assemblies and has a plurality of terminal coupling parts to extract various voltages from the fuel cell main body.

4. The planar fuel cell assembly according to claim 3, wherein the connector comprises a plurality of lead terminals having a leg shape and coupled to the terminal coupling parts.

5. The planar fuel cell assembly according to any one of the preceding claims, wherein the fuel cell main body comprises:
a middle plate comprising an inlet and an outlet adapted to introduce and discharge fuel, respectively, a manifold adapted to flow the fuel therethrough, and a plurality of holes adapted to distribute and supply the fuel;
the one or more membrane-electrode assemblies placed on opposite sides of the middle plate;
the one or more anode collectors placed between the middle plate and one surface of at least one of the membrane-electrode assemblies, each of the anode collectors having a channel to guide the flow of the fuel supplied through at least one of the holes;
the one or more cathode collectors being placed on the other surface of the at least one of the membrane-electrode assemblies, each of the cathode collectors having an opening to expose the cathode electrode of the at least one of the membrane-electrode assemblies;
an end plate placed on the one or more cathode collectors, the middle plate being between the end plate and another end plate; and
a fastening part adapted to assemble the end plate with the another end plate with a predetermined pressure.

6. The planar fuel cell assembly according to claim 5, wherein the fastening part comprises screw combining means for penetrating the end plate, the middle plate, and the another end plate.

7. The planar fuel cell assembly according to claim 5 or 6, wherein the fuel cell main body comprises a gasket placed between the middle plate and at least one of the anode collectors.

8. The planar fuel cell assembly according to any one of the preceding claims, wherein at least one of the terminals of the anode collector or the terminals of the cathode collector is substantially L-shaped.

9. A planar fuel cell assembly comprising:
a middle plate provided with a flow channel through which fuel is supplied;
a plurality of membrane-electrode assemblies placed at opposite sides of the middle plate, and comprising an electrolyte membrane, an anode electrode, and a cathode electrode, the anode and cathode electrodes attached to opposite sides of the electrolyte membrane;
a plurality of anode collectors placed between one surface of at least one of the membrane-electrode assemblies and one of the opposite sides of the middle plate, each of the anode collectors having a channel connected to the flow channel to guide the flow of the fuel;
a plurality of cathode collectors placed on the other surface of the at least one of the membrane-electrode assemblies; and
at least one first lead terminal and at least one second lead terminal protruding from the anode collector and the cathode collector on opposite lateral sides of the middle plate, respectively, the at least one first lead terminal and the at least one second lead terminal having a bent leg shape.

10. The planar fuel cell assembly according to claim 9, further comprising a connector for supporting the at least one first lead terminal and the at least one second lead terminal and coupled to the fuel cell assembly.

11. The planar fuel cell assembly according to claim 9 or 10, further comprising a first end plate and a second end plate, the first end plate being placed on the cathode collectors and the middle plate being between the first end plate and the second end plate.

12. The planar fuel cell assembly according to claim 11, further comprising a fastening part adapted to fasten the first and second end plates with a predetermined pressure.

13. The planar fuel cell assembly according to claim 12, wherein the fastening part includes screw-coupling means for penetrating the first end plate, the middle plate, and the second end plate.

14. The planar fuel cell assembly according to any one of the preceding claims, comprising a flat-type fuel cell assembly.
